(19) Europäisches Patentamt
European Patent Office
Office européen des brevets

(11) EP 1 065 828 B1

## (12) FASCICULE DE BREVET EUROPEEN

(45) Date de publication et mention
de la délivrance du brevet:
**21.11.2007 Bulletin 2007/47**

(51) Int Cl.:
***H04L 12/24*** *(2006.01)*

(21) Numéro de dépôt: **00401757.0**

(22) Date de dépôt: **20.06.2000**

(54) **Procédé d'interrogation à distance d'agents SNMP**

Verfahren zur Fernabfrage von SNMP-Agenten

Method for remote querying of SNMP agents

(84) Etats contractants désignés:
**DE FR GB**

(30) Priorité: **28.06.1999 FR 9908250**

(43) Date de publication de la demande:
**03.01.2001 Bulletin 2001/01**

(73) Titulaire: **Thomson Licensing
92100 Boulogne-Billancourt (FR)**

(72) Inventeur: **Miaikinen, Olivier
94400 Vitry sur Seine (FR)**

(74) Mandataire: **Kohrs, Martin et al
Thomson multimedia
46, quai A. Le Gallo
92648 Boulogne-Billancourt Cedex (FR)**

(56) Documents cités:
**EP-A- 0 863 645**

• **MOORE B ET AL: "CMIP/SNMP INTEGRATION PROTOTYPE" PROCEEDINGS OF THE NETWORK OPERATIONS AND MANAGEMENT SYMPOSIUM (NOMS),US,NEW YORK, IEEE, vol. SYMP. 4, 1994, pages 257-267, XP000452410 ISBN: 0-7803-1812-9**

Printed by Jouve, 75001 PARIS (FR)

## Description

La présente invention concerne un procédé d'interrogation à distance d'agents SNMP dans un système informatique.

## L'art antérieur

Pour administrer une machine sur le réseau Internet à partir d'une autre machine, on utilise le protocole SNMP (Simple Network Management Protocol - Protocole simple de gestion de réseau) de la famille des protocoles TCP/IP. Le protocole SNMP permet à une machine comportant un gestionnaire SNMP de communiquer au travers d'un réseau par un protocole réseau de type SNMP, avec une autre machine comportant un agent SNMP. Pour s'adresser à un agent SNMP à partir d'un gestionnaire SNMP, on utilise un port UDP et une adresse IP. L'agent SNMP gère des objets SNMP caractérisés par des attributs.

Les protocoles d'administration complexes tels que le protocole CMIP (Common Management Information Protocol - Protocole commun de gestion d'information) permettent de faire des requêtes globales au moyen de filtres complexes. Les filtres complexes se présentent sous la forme d'une expression de recherche booléenne appliquée aux attributs d'objets, à savoir plus précisément un ensemble de conditions sur les attributs (égalité, relations d'ordre, inclusion de chaîne de caractères...) combinées entre elles par tout type d'opérateur (ET, OU, NON, IMPLIQUE...).

Contrairement à de tels protocoles, le protocole SNMP est constitué de trois commandes et d'un message rudimentaires (GET, GETNEXT, SET et TRAP). Il ne connaît que deux types de requêtes permettant la récupération d'informations sur les attributs d'objets : les requêtes GET et GETNEXT. Le protocole SNMP est qualifié de protocole simple par opposition aux protocoles complexes tels que le protocole CMIP. Les commandes GET et GETNEXT sont des requêtes émises par le gestionnaire SNMP d'une machine sur un objet SNMP d'une autre machine au travers d'un réseau.

Un problème se pose lorsqu'un gestionnaire émet une requête complexe du type CMIP en vue de consulter et/ou modifier un objet géré par un agent SNMP. Le protocole SNMP est trop limité pour prendre en charge des opérations complexes de gestion du type CMIP.

Actuellement, pour répondre à un tel problème, le système doit parcourir l'ensemble des objets concernés par la requête CMIP et ne conserver que les résultats répondant à ladite requête.

Or, les ordinateurs étant de plus en plus puissants, le nombre des objets gérés par des agents est de plus en plus grand. Par exemple, de plus en plus d'imprimantes ou de fichiers sont gérés par le même ordinateur. Le nombre de requêtes augmente. Il en résulte une charge importante du réseau, un coût et un temps de réponse accrus.

De plus, l'interrogation de nombreuses instances peut entraîner une utilisation intensive du réseau et dégrader les performances de l'ordinateur interrogé.

Le procédé utilisé par l'intégrateur du document « CMIP/SNMP intégration prototype », par B. Moore et al., correspond au préambule de la revendication 1.

Un but de la présente invention consiste à traiter de manière optimisée tout type de requête complexe adressée à un agent SNMP.

## Résumé de l'invention

La présente invention présente un procédé de traitement d'une requête complexe tel que défini dans la revendication 1 et un système de traitement d'une requête complexe tel que défini dans la revendication 11. Les revendications dépendantes 2 à 10 correspondent à dés modes de réalisation du procédé de traitement d'une requête complexe de l'invention.

## Présentation des figures

D'autres caractéristiques et avantages de l'invention apparaîtront à la lumière de la description qui suit, donnée à titre d'exemple illustratif et non limitatif de la présente invention, en référence aux dessins annexés dans lesquels:

- la figure 1 est une vue schématique d'une forme de réalisation du système selon l'invention ; •
- la figure 2 représente partiellement un arbre d'identificateurs d'attributs gérés par le système représenté sur la figure 1 ;
- la figure 3 représente un arbre correspondant à un filtre complexe particulier.

**Description d'une forme de réalisation de l'invention**

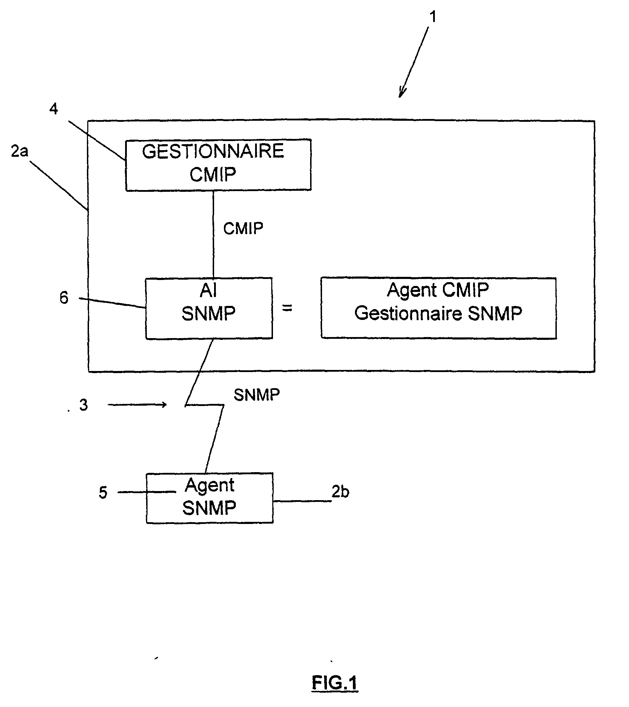

Comme le montre la figure 1, le système informatique 1 est distribué et composé de machines 2a, 2b organisées en un ou plusieurs réseaux 3. Une machine 2 est une unité conceptuelle très large, de nature matérielle et logicielle. Les machines peuvent être très diverses, telles que des stations de travail, serveurs, routeurs, machines spécialisées et passerelles entre réseaux. Seuls les composants des machines 2 du système 1 seront décrits, les autres composants étant connus de l'homme du métier.

Comme le montre la figure 1, dans le présent mode de réalisation, le système informatique 1 comprend une machine 2a dite machine application associée à au moins une application et au moins une machine 2b dite machine ressource apte à gérer au moins une ressource. La machine 2a application comporte un gestionnaire 4 de protocole complexe du type CMIP. La machine 2b ressource comporte un agent 5 SNMP. Le gestionnaire 4 dialogue avec un intégrateur d'agent 6 en utilisant le protocole complexe du type CMIP. Le terme 'complexe' sera explicité par la suite. Dans la forme de réalisation illustrée, l'intégrateur d'agent 6 fait partie de la machine 2a application. Toute autre forme de réalisation est susceptible d'être réalisée et par exemple l'intégrateur d'agent 6 pourrait faire partie d'une machine indépendante à la fois de la machine 2a application et de la machine 2b ressource. L'agent 5 SNMP communique avec l'intégrateur d'agent 6 au travers du réseau 3 en utilisant le protocole SNMP. L'intégrateur d'agent 6 réalise la traduction du protocole complexe vers le protocole SNMP. Le gestionnaire 4 transmet des requêtes complexes de type CMIP à l'intégrateur d'agent 6 qui les traduit en requêtes simples SNMP envoyées à l'agent 5 SNMP concerné.

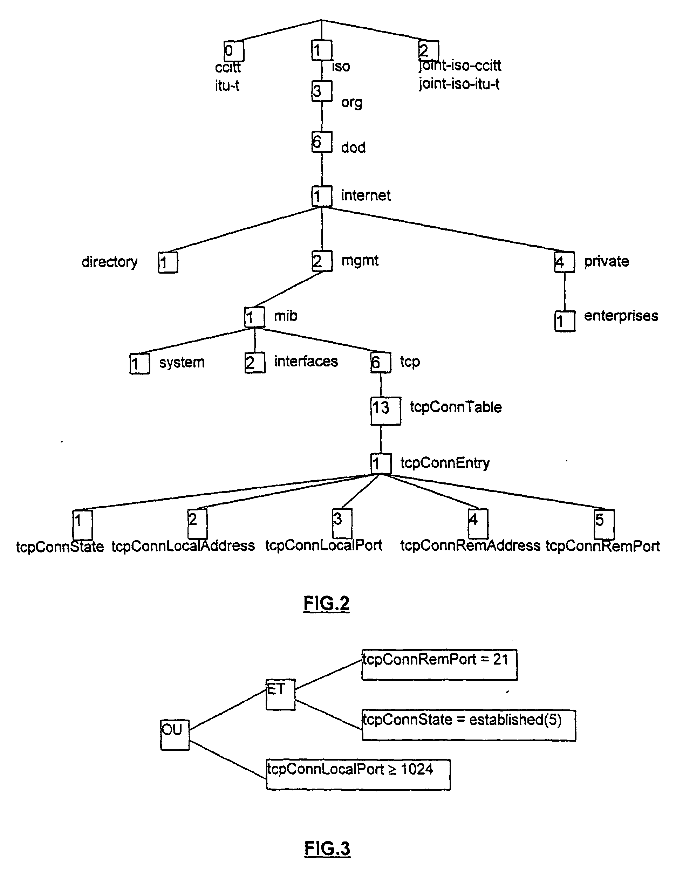

Il est rappelé qu'un agent SNMP d'une machine 2b ressource gère une MIB, (Management Information Base - Base d'informations d'administration) organisant sous forme arborescente des attributs SNMP. Un attribut SNMP est ordonné dans un arbre par un identificateur OID (Object Identifier) ; il est d'un type déterminé tel que entier, chaîne de caractères, etc, et présente une valeur à un instant donné. La figure 2 représente un arbre d'identificateurs : l'attribut 'tcpConnState' a pour identificateur 1.3.6.1.2.1.6.13.1.1.

Un agent SNMP peut gérer des objets SNMP globaux et uniques, comme le pourcentage de consommation globale du ou des processeurs de la machine ressource, et des objets SNMP multiples, comme le pourcentage de consommation de CPU d'une application. Dans ce dernier cas, il y a autant d'instances gérées par l'agent SNMP de ce type d'objet SNMP (pourcentage de consommation de CPU d'une application), qu'il y a d'applications sur la machine. L'objet est dit multi-instancié et est représenté par une table SNMP ". Lorsque l'intégrateur d'agent SNMP interroge des tables SNMP comportant de nombreuses instances, il utilise un mécanisme de requêtes et de réponses.

Dans la description qui suit, le terme " attribut " est utilisé pour désigner un objet SNMP et un attribut CMIS (Common Management Information Service - Service correspondant au protocole CMIP) ; le terme " table " pour désigner une table SNMP et un objet CMIS.

La description qui suit prend pour exemple la table SNMP des connexions, dénommée tcpConnTable. Comme le montre la figure 2, la table relative aux connexions TCP existantes " tcpConnTable " est désignée par un identificateur, 1.3.6.1.2.1.6.13. 1.3 est fixé par l'ISO. 1.3.6.1 désigne internet. 1.3.6.1.2.1 désigne la MIB standard (mib-ll). 1.3.6.1.2.1.6 désigne tcp, 1.3.6.1.2.1.6.13 désigne la table des connexions (la MIB standard mib-ll et la table des connexions TCP sont définies dans la RFC 1213 (RFC - Request For Comments - Demande de commentaires). La table " tcpConnTable " comprend cinq attributs :

tcpConnState (OID : 1.3.6.1.2.1.6.13.1.1) ;
tcpConnLocalAddress (OID : 1.3.6.1.2.1.6.13.1.2) ;
tcpConnLocalPort(OID: 1.3.6.1.2.1.6.13.1.3) ;
tcpConnRemAddress (OID : 1.3.6.1.2.1.6.13.1.4) ;
tcpConnRemPort (OID : 1.3.6.1.2.1.6.13.1.5).

Les attributs tcpConnLocalAddress, tcpConnLocalPort, tcpConnRemAddress, tcpConnRemPort sont des attributs d'index. La concaténation de l'identificateur d'un attribut avec les valeurs, dans l'ordre, de tous les attributs d'index, donne l'identificateur d'une instance particulière de cet attribut. L'annexe 1 donne un exemple de valeurs de ladite table : dans cet exemple, la table comporte 41 instances. Par exemple, l'identificateur de la 37ème instance de l'attribut tcpConnState est :

tcpConnState.219.182.165.53.1021.219.182.165.55.513

soit :

<u>1.3.6.1.2.1.6.13.1.1</u> . <u>219.182.165.53</u> . <u>1021</u> . <u>219.182.165.55</u> . <u>513</u>

<u>tcpConnState</u>      1$^{er}$ index     2$^{ème}$ index    3$^{ème}$ index   4$^{ème}$ index

identificateur

Par extension, l'identificateur d'une instance désigne également l'ensemble des quatre index, sans le nom de l'attribut. Cet identificateur sert alors à désigner l'instance de n'importe quel attribut de la table.

L'identificateur ci-dessus est celui de la 37$^{ème}$ instance de l'attribut tcpConnState. Le 1$^{er}$ index correspond à la valeur de la 37$^{ème}$ instance de l'attribut d'index tcpConnLocalAddress ; le 2$^{ème}$ index à la valeur de la 37$^{ème}$ instance de l'attribut d'index tcpConnLocalPort ; le 3$^{ème}$ index correspond à la valeur de la 37$^{ème}$ instance de l'attribut d'index tcpConnRemAddress ; le 4$^{ème}$ index à la valeur de la 37$^{ème}$ instance de l'attribut d'index tcpConnRemPort. Ainsi, les quatre derniers composants de l'identificateur de l'attribut tcpConnState correspondent aux valeurs de la même instance des quatre attributs d'index (appelées 1$^{er}$, 2$^{ème}$, 3$^{ème}$ et 4$^{ème}$ index).

La valeur des attributs d'index est identique au composant de l'identificateur correspondant à l'attribut d'index en question (i$^{ème}$ index). Ainsi, par exemple, la 37$^{ème}$ instance de l'attribut d'index tcpConnLocalAddress dont l'identificateur est :

   tcpConnLocalAddress.<u>219.182.165.53</u>.1021.219.182.165.55.513 a pour valeur 219.182.165.53 : cette valeur est identique au composant de l'identificateur (1$^{er}$ index) correspondant à l'attribut d'index tcpConnLocalAddress. L'attribut tcpConnState n'est pas un attribut d'index : il est ordonné à l'aide des attributs d'index.

Dans cet exemple (annexe 1), l'attribut tcpConnState est de type entier et la première instance présente une valeur égale à 1 à un instant t donné. Dans la forme de réalisation de la figure 1, si le gestionnaire SNMP émet un GET sur la première instance de l'attribut tcpConnState de la machine 2b ressource, l'agent SNMP de la machine 2b ressource répond que la valeur de l'attribut tcpConnState est 1, soit que l'état de la connexion est fermé (closed). Le gestionnaire SNMP peut faire un GETNEXT sur la première instance de l'attribut tcpConnState. L'agent SNMP répond que la valeur recherchée est celle de l'attribut dont l'identificateur (1.3.6.1.2.1.6.13.1.1.0.0.0.0.7.0.0.0.0.0) succède dans un ordre croissant à identificateur de la première instance de l'attribut tcpConnState (1.3.6.1.2.1.6.13.1.1.0.0.0.0.0.0.0.0.0.0). Dans le présent exemple, l'attribut, dont l'identificateur succède à l'identificateur de la première instance de l'attribut tcpConnState, est la deuxième instance de l'attribut tcpConnState. L'agent SNMP, installé sur la machine 2b ressource, répond que la valeur de l'instance qui suit, à savoir la deuxième instance de l'attribut tcpConnState est 2 et ainsi de suite sur toutes les instances de la table des connexions jusqu'à ce que l'on passe à un identificateur désignant un autre type d'attribut SNMP tel que, dans cet exemple, tcpConnLocalAdress.

La commande GET permet de lire la valeur d'un (ou plusieurs) attribut(s) dont on connaît déjà l'existence (identificateur connu). Seule la commande GETNEXT permet de retrouver d'autres instances en utilisant le fait que toutes les instances sont ordonnées. La commande GETNEXT permet de parcourir toute une table d'instances par des requêtes successives : en partant du début de la table, un premier GETNEXT délivre la première instance existante; ensuite un GETNEXT sur cette première instance donne la deuxième instance, et ainsi de suite jusqu'à la fin de la table.

Dans le cas d'une requête complexe relative à une table SNMP, la requête comprend :

- l'identification de la table SNMP considérée ;
- un ensemble de conditions sur des attributs (y compris des index) de la table.

Par exemple, une requête complexe sur la table des connexions TCP (tcpConnTable) présente l'ensemble des conditions suivantes :

   " le numéro de port distant est 21 et la connexion est active, ou le numéro de port local est supérieur ou égal à 1024 ".

L'ensemble des conditions peut être représenté d'une façon un peu plus formelle par un filtre complexe par exemple de type CMIS :

```
(OU
 (ET
   tcpConnRemPort EGAL_A 21
   tcpConnState EGAL_A established(5)
   )
```

```
    tcpConnLocalPort SUPERIEUR_OU_EGAL_A 1024
).
```

Le filtre complexe peut être représenté sous la forme d'un arbre comme le montre la figure 3. Les noeuds de l'arbre qui ne sont pas suivis d'autre noeud sont appelés les feuilles. L'arbre de la figure 3 comporte trois feuilles: la feuille tcpConnRemPort = 21 ; la feuille tcpConnState = established(5) ; la feuille tcpConnLocalPort $\geq$ 1024. Les feuilles représentent des conditions sur des attributs tandis que les autres noeuds représentent des opérations booléennes sur un ou plusieurs noeuds.

Une requête complexe dans la présente description est une requête transmise par un gestionnaire 4, portant sur des attributs SNMP gérés par un agent 5 et susceptible d'être représentée par un filtre complexe constitué d'un nombre quelconque de conditions sur un nombre quelconque d'attributs, reliées entre elles par un nombre quelconque d'opérateurs tels que ET, OU, NON, OU-EXCLUSIF, etc.

Le protocole SNMP ne permet pas à l'agent 5 SNMP de répondre à de telles requêtes complexes, compte tenu des commandes rudimentaires qui constituent le protocole SNMP, comme vu plus haut.

Le procédé selon le présent mode de réalisation consiste à traiter ladite requête complexe au moyen de l'intégrateur d'agent 6 qui traduit ladite requête complexe (dans l'exemple illustré de type CMIP) en requêtes SNMP, et à optimiser le nombre de requêtes SNMP transmises sur le réseau 3, en particulier le nombre des requêtes GETNEXT.

Le procédé selon le présent mode de réalisation comprend les étapes suivantes :

1- transformer un filtre F1complexe issu de la requête complexe en un filtre F2 simplifié ne comportant que des conditions sur des index et respectant les caractéristiques de correspondance ;

2- déterminer la première instance potentielle vérifiant les conditions du filtre F2 simplifié ; l'identificateur qui est juste inférieur à l'identificateur de l'instance potentielle déterminée est appelé identificateur de test ;

3- retrouver à partir d'une requête SNMP l'instance de la table ayant pour identificateur celui qui suit l'identificateur de test. Si aucune instance n'est retrouvée, le procédé de traitement est terminé. Si une instance est retrouvée, l'instance retrouvée est appelée instance solution ;

4- appliquer le filtre F1 complexe à l'instance solution ; si l'instance vérifie le filtre F1, elle fait partie de la réponse à la requête complexe traitée ;

5- déterminer la première instance potentielle dont l'identificateur est supérieur à l'identificateur de l'instance solution et vérifiant les conditions du filtre F2 simplifié. Si aucune instance n'est retrouvée, le procédé de traitement est terminé. Si une instance est retrouvée, l'identificateur qui est juste inférieur à l'identificateur de l'instance potentielle est appelé identificateur de test et le procédé reprend à partir de la troisième étape.

La première étape consiste à construire à partir d'un filtre F1 issu d'une requête complexe donnée, dans l'exemple illustré de type CMIP, un filtre F2 simplifié qui ne comprend que des conditions portant sur des index.

Le filtre simplifié F2 respectent les caractéristiques, appelées caractéristiques de correspondance, suivantes:

- s'il peut exister des valeurs d'attributs telles qu'une instance donnée de la table vérifie le filtre F1, alors cette instance vérifie le filtre F2;

- si une instance de la table ne peut pas vérifier le filtre F1 quelles que soient les valeurs d'attributs qui ne sont pas des index, alors cette instance ne vérifie pas le filtre F2.

Si aucune instance ne vérifie de prime abord le filtre complexe F2, l'intégrateur d'agent 6 transmet une réponse vide à la requête complexe transmise par le gestionnaire 4. Selon une forme de réalisation, la dite vérification est réalisée de la manière suivante: l'intégrateur d'agent 6 dispose d'une liste de règles définissant les filtres qui ne sont vérifiés de prime abord par aucune instance, telles que par exemple :

" Si un filtre porte sur une valeur d'attribut V du type " V=a ET V>b " et si " a$\leq$b " alors le filtre n'a pas de réponse ". C'est le cas par exemple lorsque V représente un numéro de port distant, a=22 et b=41.

Une autre forme de réalisation sera décrite ultérieurement.

L'intégrateur d'agent 6 peut également disposer d'une liste de règles de transformation telles que par exemple :

(V$\geq$a) ET (V$\leq$a) correspond à V=a ;
(V$\geq$a) ET (V différent de a) correspond à V>a ;
(V$\geq$a) OU (V<a) correspond à VRAI (condition toujours vérifiée).

En partant d'un filtre complexe quelconque F1, le procédé consiste, au moyen de l'intégrateur d'agent 6, à obtenir un filtre simplifié F2 de la forme suivante :

```
(OU
    (ET
        condition sur le 1er index
        condition sur le 2ème index
        ...
        condition sur le nième index
    )
    (ET
        condition sur le 1er index
        condition sur le 2ème index
        ...
        condition sur le nième index
    )
    ...
)
```

Si le filtre complexe contient d'autres opérateurs que des ET, des OU et des NON, le procédé selon l'invention transforme lesdits opérateurs en combinaisons de ET, OU et NON à l'aide de règles connues sur les opérateurs logiques.

Par exemple pour les opérateurs binaires OU-EXCLUSIF et IMPLIQUE:

(OU-EXCLUSIF A B) est équivalent à (OU (ET A (NON B)) (ET B (NON A))) ; (IMPLIQUE A B) est équivalent à (OU (NON A) B).

Le procédé consiste ensuite à repousser tous les opérateurs NON vers les feuilles de l'arbre représentant le filtre en appliquant les règles suivantes autant de fois qu'il est possible de le faire :

- remplacer (NON (OU A B C ...)) par (ET (NON A) (NON B) (NON C) ...)
- remplacer (NON (ET A B C ...)) par (OU (NON A) (NON B) (NON C) ...)
- remplacer (NON (NON A)) par A.

L'étape suivante consiste à supprimer du filtre toutes les conditions portant sur des attributs qui ne sont pas des index. Il est à noter que, si X est une condition portant sur un attribut qui n'est pas un index, alors il peut exister des valeurs de l'attribut pour lesquelles X est vrai, et d'autres pour lesquelles (NON X) est vrai : tous les (NON X), repoussés vers les feuilles dans l'étape précédente, sont remplacés par la constante VRAI, puis tous les X restants sont remplacés par la constante VRAI.

Cette étape permet d'assurer les caractéristiques de correspondance.

Le filtre est à nouveau simplifié en appliquant les règles suivantes autant de fois qu'il est possible de le faire :

- Remplacer toutes les opérations ET ne contenant que des opérandes VRAI par la constante VRAI.
  Par exemple, remplacer (ET VRAI VRAI VRAI) par VRAI.
- Retirer tous les opérandes VRAI des autres opérations ET.
  Par exemple, remplacer (ET A B VRAI C VRAI) par (ET A B C).
- Remplacer toutes les opérations OU contenant au moins un opérande VRAI par la constante VRAI.
  Par exemple, remplacer (OU A B VRAI C VRAI) par VRAI.
- Remplacer les opérations ET et OU à un seul opérande par cet opérande.
  Par exemple, remplacer (ET A) par A.

- Factoriser les ET et OU imbriqués.
  Par exemple, remplacer (OU A (OU B C) D) par (OU A B C D).
- Regrouper les conditions concernant le même index. Dans la description qui suit, des conditions, simples ou complexes, portant respectivement sur l'index numéro 1, 2, 3, ... n seront appelées C1, C2, C3, ... Cn. De la même manière, une condition quelconque portant sur un index quelconque k, compris entre 1 et n sera appelée Ck. Une condition du type (OU (ET Ck Ck) Ck (NON Ck)) est remplacée par une seule condition de type Ck un peu plus complexe. Ce type de transformation aura notamment pour effet de supprimer tous les opérateurs NON.
- Lorsqu'une condition de type Ck est toujours vraie ou toujours fausse, remplacer cette condition par la valeur VRAI ou FAUX, respectivement. Selon une forme de réalisation du système 1, l'intégrateur d'agent 6 dispose d'une liste de règles telles que par exemple :

(index 3 < 22) ET (index 3 > 23) correspond à une condition FAUX ;
(index 3 < 22) OU (index 3 > 21) correspond à une condition VRAI.

- Remplacer toutes les opérations OU ne contenant que des conditions FAUX par la constante FAUX.
  Par exemple, remplacer (OU FAUX FAUX FAUX) par FAUX.
- Retirer toutes les conditions FAUX des autres opérations OU.
  Par exemple, remplacer (OU A B FAUX C FAUX) par (OU A B C).
- Remplacer toutes les opérations ET contenant au moins une condition FAUX par la constante FAUX.
  Par exemple, remplacer (ET A B FAUX C FAUX) par FAUX.

Les règles sont appliquées dans cet ordre ou dans un ordre différent jusqu'à ce que plus aucune desdites règles ne soit applicable.

Les règles ci-dessus permettent d'obtenir un filtre simplifié appartenant à l'un des trois cas suivants:

1) Le filtre se résume à la seule condition VRAI ;
2) Le filtre se résume à la seule condition FAUX ;
3) Le filtre ne contient que des opérateurs ET et OU, chacun comprenant au maximum une condition sur chacun des index, et aucun ne comprenant la valeur VRAI ou FAUX.

Dans le premier cas, aucune connaissance n'est susceptible d'être obtenue a priori sur les instances qui conviendront : la table doit être parcourue dans son intégralité.

Dans le second cas, aucune instance ne peut convenir: l'agent intégrateur 6 répond au filtre complexe par une réponse vide.

Dans le troisième cas, le procédé consiste à regrouper tous les OU à la racine du filtre : tout opérateur OU contenu dans un opérateur ET est développé.
Par exemple,
(ET C3 (OU C1 C2) C6) devient (OU (ET C3 C1 C6) (ET C3 C2 C6))

Certaines des simplifications précédentes doivent à nouveau être appliquées, à savoir :

- Remplacer les opérations ET et OU à un seul opérande par cet opérande.
- Factoriser les ET et OU imbriqués.
- Regrouper les conditions concernant le même index.
- Lorsqu'une condition de type Ck est toujours vraie ou toujours fausse, remplacer cette condition par la valeur VRAI ou FAUX, respectivement.
- Remplacer toutes les opérations ET contenant au moins une condition FAUX par la constante FAUX.
- Remplacer toutes les opérations ET ne contenant que des conditions VRAI par la constante VRAI.
- Retirer toutes les conditions VRAI des autres opérations ET.
- Remplacer toutes les opérations OU contenant au moins une condition VRAI par la constante VRAI.
- Remplacer toutes les opérations OU ne contenant que des conditions FAUX par la constante FAUX.
- Retirer toutes les conditions FAUX des autres opérations OU.

Les règles sont appliquées dans cet ordre ou dans un ordre différent jusqu'à ce que plus aucune desdites règles ne soit applicable.

Le filtre simplifié obtenu appartient à l'un des cas suivants:

1) Le filtre se résume à la seule condition VRAI ;
2) Le filtre se résume à la seule condition FAUX ;

3) Le filtre se résume à une seule condition Ck ;
4) Le filtre se présente sous la forme d'un ET entre deux ou plusieurs conditions Ck ;
5) Le filtre se présente sous la forme d'un OU entre deux ou plusieurs filtres du type 3) ou 4).

En dehors des cas 1) et 2) déjà traités plus haut, le filtre simplifié F2 a donc la forme suivante (ou bien une forme plus simple que la forme suivante, qui peut facilement s'y ramener) :

$$F2 = (OU\ (ET\ C1_{(1)}\ C2_{(1)} ...\ Cn_{(1)})\ ...\ (ET\ C1_{(i)}\ C2_{(i)} ...\ Cn_{(i)})\ ...).$$

Le filtre simplifié F2 peut s'écrire sous la forme suivante:

$$F2 = (OU\ F2_{(1)}\ F2_{(2)} ...F2_{(i)} ...F2_{(m)})$$

où chaque $F2_{(i)}$ a la forme suivante:

$$F2_{(i)} = (ET\ C1_{(i)}\ C2_{(i)} ...\ Cn_{(i)})$$

La deuxième étape consiste, au moyen de l'intégrateur d'agent 6, à déterminer la première instance, appelée instance potentielle, qui vérifie les conditions du filtre simplifié F2.

La première instance potentielle vérifiant le filtre F2 est la plus petite des premières instances potentielles dites " locales " vérifiant chacun des $F2_{(i)}$ : le procédé consiste donc à rechercher la première instance qui vérifie un filtre du type (ET $C1_{(i)}\ C2_{(i)} ...\ Cn_{(i)}$). Pour tout i, l'identificateur de la première instance potentielle " locale " vérifiant $F2_{(i)}$ est obtenu en concaténant la première valeur $I1\_0_{(i)}$ vérifiant $C1_{(i)}$ à la première valeur $I2\_0_{(i)}$ vérifiant $C2_{(i)}$, etc. jusqu'à $In\_0_{(i)}$ vérifiant $Cn_{(i)}$. L'identificateur de l'instance potentielle locale, dite instance potentielle locale " zéro " parce que instance potentielle locale obtenue la première en début de procédé, est $I1\_0_{(i)}.I2\_0_{(i)}. ... .In\_0_{(i)}$. S'il n'y a pas de condition sur un index k ($k^{ième}$ index) donné, la première valeur possible est prise pour cet index : 0 pour un entier, 0.0.0.0 pour une adresse IP, etc. L'identificateur de l'instance potentielle est le plus petit des identificateurs des instances potentielles locales zéro obtenues.

Il est à noter que l'intégrateur d'agent 6 connaît les valeurs des index (comme vu plus haut) contrairement aux valeurs des attributs pour lesquels il doit interroger l'agent 5 qui gère l'attribut concerné.

Pour un indice i donné et pour chaque indice k, il existe au moins une valeur $Ik\_0_{(i)}$ qui vérifie la condition $Ck_{(i)}$, sinon la condition $Ck_{(i)}$ aurait été supprimée vers la fin de la première étape. L'autre forme de réalisation du système mentionnée plus haut et permettant à l'intégrateur d'agent de détecter les filtres pour lesquels aucune réponse n'est possible est la suivante : attendre la 2ème étape pour les supprimer et dans la 2ème étape, s'il existe une condition Ck pour laquelle aucune valeur n'est retrouvée, la condition Ck fait partie des conditions pour lesquelles aucune réponse n'est possible.

L'identificateur qui est juste inférieur à celui de l'instance potentielle est appelé identificateur de test. Il est obtenu de la manière suivante :

- Si le dernier chiffre de l'identificateur de l'instance potentielle est différent de 0, l'identificateur de test est identique à l'identificateur de l'instance potentielle sauf au niveau du dernier chiffre qui est juste inférieur au dernier chiffre de l'identificateur de l'instance potentielle.
  Par exemple:

  195.3.27.2 (identificateur de l'instance potentielle) -> 195.3.27.1

  (identificateur de test)

- Si le dernier chiffre de l'identificateur de l'instance potentielle est égal à 0, l'identificateur de test correspond à l'identificateur de l'instance potentielle sans son dernier chiffre.
  Par exemple:

195.3.27.0 (identificateur de l'instance potentielle) -> 195.3.27 (identificateur de test).

L'intégrateur d'agent 6 applique, dans une troisième étape, la requête GETNEXT sur l'identificateur de test.

Si la réponse au GETNEXT indique que la fin de la table est atteinte, l'intégrateur d'agent 6 répond à la requête complexe qu'il n'y a plus d'autre réponse. Le traitement est terminé : ceci constitue le premier cas de terminaison.

Si une instance est obtenue, elle est appelée instance solution. Si Ik désigne la valeur de chacun des index k de l'instance solution, l'identificateur de l'instance solution, appelé identificateur solution, est : I1.I2...In.

Dans une quatrième étape, l'intégrateur d'agent 6 applique le filtre F1 complexe à la dite instance solution. Si la réponse convient, elle est renvoyée en réponse à la requête complexe. Que la réponse convienne ou non, le procédé poursuit le traitement.

Le procédé, dans la cinquième étape, au moyen de l'intégrateur d'agent 6, détermine la première instance potentielle dont l'identificateur est strictement supérieur à l'identificateur solution et qui vérifie le filtre simplifié F2. Cette première instance potentielle est la plus petite des premières instances potentielles locales pour chaque filtre $F2_{(i)}$, dont l'identificateur est strictement supérieur à l'identificateur solution et qui vérifie le filtre $F2_{(i)}$.

I1.I2. ... .In est l'identificateur solution, comme vu plus haut.

Les opérations suivantes sont effectuées pour chaque $F2_{(i)}$.

Soit p le premier indice tel que Ip ne vérifie pas la condition $Cp_{(i)}$.

S'il n'existe pas un tel indice p (c'est-à-dire si l'instance vérifie complètement le filtre), alors on prend p = n.

Le procédé effectue la boucle suivante tant que l'indice p>0 et qu'aucune instance n'a été trouvée :

{ S'il existe un $Jp_{(i)}$ > Ip qui vérifie la condition $Cp_{(i)}$, alors l'identificateur de l'instance potentielle locale est constitué de la manière suivante:

- pour tout index k < p, on prend la valeur Ik ;

- pour l'index p, on prend la valeur $Jp_{(i)}$ ;

- pour tout index k > p, on prend la valeur $Ik\_0_{(i)}$ ;

et le procédé quitte la boucle ;

Sinon p ::= p-1 et le procédé continue à boucler avec la nouvelle valeur de p ;

}

Il est rappelé que la valeur $Ik\_0_{(i)}$ correspond à l'identificateur de l'instance potentielle locale zéro en début de procédé ($I1\_0_{(i)}.I2\_0_{(i)}. ... .In\_0_{(i)}$) (voir plus haut).

Si p = 0, c'est qu'il n'y a plus d'autre instance qui vérifie cet ensemble de conditions pour $F2_{(i)}$.

Si aucune instance potentielle locale n'est obtenue (c'est-à-dire si le procédé quitte la boucle avec p=0 pour chaque $F2_{(i)}$), c'est qu'il n'y a plus d'autre instance qui vérifie le filtre simplifié F2 ; l'intégrateur d'agent 6 indique en réponse à la requête complexe du gestionnaire 4 qu'il n'y a plus d'autre réponse. Le traitement est terminé : ceci constitue le deuxième cas de terminaison.

Si au moins une instance potentielle locale est obtenue, l'identificateur de l'instance potentielle est le plus petit des identificateurs des instances potentielles locales obtenues. L'identificateur qui est juste inférieur à l'identificateur de l'instance potentielle est appelé identificateur de test. Le procédé reprend à partir de la troisième étape. L'intégrateur 6 d'agent applique un GETNEXT sur l'identificateur de test et ainsi de suite. Les troisième, quatrième et cinquième étapes sont appliquées jusqu'à ce que le traitement se termine dans l'un des deux cas de terminaison présentés précédemment.

Le procédé selon un mode de réalisation est décrit au travers de l'exemple détaillé qui suit. Les valeurs de la table de connexion sont données par l'annexe 1.

Le filtre complexe F1 est le suivant :

```
(ET
    tcpConnState EGAL_A 5
    (OU
        tcpConnLocaIPort EGAL_A 21
        tcpConnLocalPort EGAL_A 23
    )
    (NON
        tcpConnRemAddress EGAL_A 127.0.0.1
    )
    tcpConnRemPort SUPERIEUR_OU_EGAL_A 1024
)
```

La première étape est automatique dans cet exemple. La condition sur l'attribut tcpConnState est mis à la valeur VRAI et de ce fait, le filtre simplifié F2 est de la forme :

$$F2 = (OU\ F2_{(1)}) = F2_{(1)} = (ET\ C1_{(1)}\ C2_{(1)}\ C3_{(1)}\ C4_{(1)})$$

avec :

$C1_{(1)}$ :    aucune contrainte sur le premier index
$C2_{(1)}$ :    deuxième index EGAL_A 21 ou 23
$C3_{(1)}$ :    troisième index DIFFERENT_DE 127.0.0.1
$C4_{(1)}$ :    quatrième index SUPERIEUR_OU_EGAL_A 1024

La deuxième étape consiste à rechercher l'instance potentielle locale zéro, à savoir les premières valeurs possibles pour chacune des conditions. Les premières valeurs possibles sont :

$$I1\_0_{(1)} = 0.0.0.0$$

$$I2\_0_{(1)} = 21$$

$$I3\_0_{(1)} = 0.0.0.0$$

$$I4\_0_{(1)} = 1024.$$

L'identificateur de l'instance potentielle locale zéro est obtenu en concaténant la première valeur vérifiant $C1_{(1)}$ à la première valeur vérifiant $C2_{(1)}$ à la première valeur vérifiant $C3_{(1)}$ et à la première valeur vérifiant $C4_{(1)}$ : $I1\_0_{(1)}.I2\_0_{(1)}.I3\_0_{(1)}.I4\_0_{(1)}$, soit 0.0.0.0.21.0.0.0.0.1024. Comme il n'existe qu'un unique $F2_{(1)}$, à savoir $F2_{(1)}$, l'identificateur obtenu est le plus petit et correspond à l'identificateur de l'instance potentielle. L'identificateur de test est donc 0.0.0.0.21.0.0.0.0.1023.
La troisième étape consiste à appliquer la première requête GETNEXT sur cet identificateur de test. Le résultat obtenu (identificateur solution 11.12.13.14) est 0.0.0.0.23.0.0.0.0.0.
Dans une quatrième étape, le filtre F1 est appliqué audit résultat, à savoir à l'identificateur solution. Le filtre F1 échoue sur cette instance (I4<1024 et tcpConnState égal à 2 différent de 5).
Dans une cinquième étape, la première instance potentielle locale dont l'identificateur est strictement supérieur à l'identificateur solution (identificateur de l'instance solution) est calculé. Soit p le premier indice tel que Ip ne vérifie pas la condition $Cp_{(1)}$.
Ce n'est pas p=1 car il n'y a pas de contrainte sur I1 ;
Ce n'est pas p=2 car I2=23 vérifie $C2_{(1)}$ ;
Ce n'est pas p=3 car I3=0.0.0.0 vérifie $C3_{(1)}$ ;

C'est p=4 car I4=0 ne vérifie pas $C4_{(1)}$.

Le procédé rentre dans la boucle de calcul (le procédé reste dans la boucle tant que p>0 et qu'aucune instance n'a été trouvée) :

$$p=4 : \text{existe-t-il un } J4_{(1)} \text{ supérieur à } I4=0 \text{ qui vérifie } C4_{(1)} ? \text{ Oui :}$$

$$J4_{(1)}=1024$$

Le nouvel identificateur de l'instance potentielle est donc $I1.I2.I3.J4_{(1)}$, soit 0.0.0.0.23.0.0.0.0.1024. Le nouvel identificateur de test est alors 0.0.0.0.23.0.0.0.0.1023. Le procédé reprend à la troisième étape : le résultat de la deuxième requête GETNEXT sur cet identificateur de test donne 0.0.0.0.25.0.0.0.0.0 (identificateur solution I1.I2.I3.I4). Le filtre F1 échoue sur cette instance (I4<1024, I2 différent de 21 ou 23 et tcpConnState égal à 2 différent de 5).

Le procédé continue en calculant la première instance potentielle locale dont l'identificateur est strictement supérieur à l'identificateur solution (identificateur de l'instance solution). Soit p le premier indice tel que Ip ne vérifie pas la condition $Cp_{(1)}$.

Ce n'est pas p=1 car il n'y a pas de contrainte sur I1 ;

C'est p=2 car I2=25 ne vérifie pas $C2_{(1)}$.

Le procédé rentre dans la boucle de calcul (le procédé reste dans la boucle tant que p>0 et qu'aucune instance n'a été trouvée) :

p=2 : existe-t-il un $J2_{(1)}$ supérieur à I2=25 qui vérifie $C2_{(1)}$ ? Non.

p=1 : existe-t-il un $J1_{(1)}$ supérieur à I1=0.0.0.0 ? Oui : $J1_{(1)}$=0.0.0.1

Le nouvel identificateur de l'instance potentielle est donc $J1_{(1)}I2\_1_{(1)}.I3\_0_{(1)}.I4\_0_{(1)}$, soit 0.0.0.1.21.0.0.0.0.1024 (il est rappelé que l'identificateur de l'instance potentielle locale zéro en début de procédé $I1\_0_{(1)}.I2\_0_{(1)}.I3\_0_{(1)}.I4\_0_{(1)}$ est égal à 0.0.0.0.21.0.0.0.0.1024). Le nouvel identificateur de test est alors 0.0.0.1.21.0.0.0.0.1023. Le résultat du troisième GETNEXT sur cet identificateur de test donne 127.0.0.1.1026.127.0.0.1.2600 (identificateur solution I1.I2.I3.I4). Le filtre F1 échoue sur cet identificateur solution (I2 différent de 21 ou 23).

Le procédé continue en calculant la première instance potentielle locale dont l'identificateur est strictement supérieur à l'identificateur solution. Soit p le premier indice tel que Ip ne vérifie pas la condition $Cp_{(1)}$.

Ce n'est pas p=1 car il n'y a pas de contrainte sur I1 ;

C'est p=2 car I2=1026 ne vérifie pas $C2_{(1)}$.

Le procédé rentre dans la boucle de calcul (le procédé reste dans la boucle tant que p>0 et qu'aucune instance n'a été trouvée) :

p=2 : existe-t-il un $J2_{(1)}$ supérieur à I2=1026 qui vérifie $C2_{(1)}$ ? Non.

p=1 : existe-t-il un $J1_{(1)}$ supérieur à I1=127.0.0.1 ? Oui : $J1_{(1)}$=127.0.0.2

Le nouvel identificateur de l'instance potentielle est donc $J1_{(1)}.I2\_0_{(1)}.I3\_0_{(1)}.I4\_0_{(1)}$, soit 127.0.0.2.21.0.0.0.0.1024. Le nouvel identificateur de test est alors 127.0.0.2.21.0.0.0.0.1023. Le résultat du quatrième GETNEXT sur cet identificateur de test donne 219.182.165.53.23.219.182.165.55.4109 (identificateur solution I1.I2.I3.I4). Le filtre F1 réussit sur cet identificateur solution ; une réponse est donc envoyée à la requête complexe.

Le procédé continue en calculant la première instance potentielle locale dont l'identificateur est strictement supérieur à l'identificateur solution. Soit p le premier indice tel que Ip ne vérifie pas la condition $Cp_{(1)}$.

Ce n'est pas p=1 car il n'y a pas de contrainte sur I1 ;

Ce n'est pas p=2 car I2=23 vérifie $C2_{(1)}$ ;

Ce n'est pas p=3 car I3=219.182.165.55 vérifie $C3_{(1)}$ ;

Ce n'est pas p=4 car I4=4109 vérifie $C4_{(1)}$.

Puisqu'il n'existe pas de tel p, on prend p=n=4.

Le procédé rentre dans la boucle de calcul (le procédé reste dans la boucle tant que p>0 et qu'aucune instance n'a été trouvée) :

p=4 : existe-t-il un $J4_{(1)}$ supérieur à I4=4109 qui vérifie $C4_{(1)}$ ? Oui : $J4_{(1)}$=4110

Le nouvel identificateur de l'instance potentielle est donc $I1.I2.I3.J4_{(1)}$, soit 219.182.165.53.23.219.182.165.55.4110. Le nouvel identificateur de test est alors 219.182.165.53.23.219.182.165.55.4109. Le résultat du cinquième GETNEXT sur cet identificateur de test donne 219.182.165.53.139.219.182.165.58.2278 (identificateur solution I1.I2.I3.I4). Le filtre F1 échoue sur cet identificateur solution.

Le procédé continue en calculant la première instance potentielle locale dont l'identificateur est strictement supérieur à l'identificateur solution. Soit p le premier indice tel que Ip ne vérifie pas la condition $Cp_{(1)}$.

Ce n'est pas p=1 car il n'y a pas de contrainte sur I1 ;

C'est p=2 car I2=139 ne vérifie pas $C2_{(1)}$.

Le procédé rentre dans la boucle de calcul (le procédé reste dans la boucle tant que p>0 et qu'aucune instance n'a été trouvée) :

p=2 : existe-t-il un $J2_{(1)}$ supérieur à I2=139 qui vérifie $C2_{(1)}$ ? Non.

p=1 : existe-t-il un $J1_{(1)}$ supérieur à I1=219.182.165.53 ? Oui : $J1_{(1)}$=219.182.165.54

Le nouvel identificateur de l'instance potentielle est donc $J1_{(1)}.I2\_0_{(1)}.I3\_0_{(1)}.I4\_0_{(1)}$, soit 219.182.165.54.21.0.0.0.0.1024. Le nouvel identificateur de test est alors 219.182.165.54.21.0.0.0.0.1023. Le résultat du sixième GETNEXT sur cet identificateur de test indique qu'il n'y a plus d'autre instance. On peut alors répondre à la requête complexe que la recherche est finie.

Il est à noter que pour parcourir les 41 instances de la table selon l'art antérieur, il aurait fallu 42 requêtes GETNEXT (il faut une requête GETNEXT supplémentaire pour détecter la fin de la table), alors que selon l'invention, 6 requêtes GETNEXT ont suffi.

Le procédé consiste à :

1) transformer le filtre F1 issu de la requête complexe en un filtre F2 simplifié ne comportant que des conditions sur des index et respectant les caractéristiques de correspondance ;

2) déterminer la première instance potentielle vérifiant le filtre F2 simplifié ; l'identificateur qui est juste inférieur à l'identificateur de l'instance potentielle déterminée est appelé identificateur de test ;

3) retrouver à partir d'une requête SNMP l'instance de la table ayant pour identificateur celui qui suit l'identificateur de test. Si aucune instance n'est retrouvée, le procédé de traitement est terminé. Si une instance est retrouvée, l'instance retrouvée est appelée instance solution ;

4) appliquer le filtre complexe F1 à l'instance solution ; si l'instance vérifie le filtre F1, elle fait partie de la réponse à la requête complexe traitée ;

5) déterminer la première instance potentielle dont l'identificateur est supérieur à l'identificateur de l'instance solution et vérifiant le filtre F2 simplifié. Si aucune instance n'est retrouvée, le procédé de traitement est terminé. Si une instance est retrouvée, l'identificateur qui est juste inférieur à l'identificateur de l'instance potentielle est appelé identificateur de test et le procédé reprend à la troisième étape.

Le procédé consiste à obtenir dans la première étape un filtre simplifié de la forme :

(OU

(ET

Condition sur l'index 1 : $C1_{(1)}$

Condition sur l'index 2 : $C2_{(1)}$

...

condition sur l'index n : $Cn_{(1)}$

)

...

(ET

condition sur l'index 1 : $C1_{(i)}$

condition sur l'index 2 : $C2_{(i)}$

...

condition sur l'index n : $Cn_{(i)}$

)

...

).

Si, dans la première étape, après simplification, le filtre se résume :

- à la seule condition VRAI, la table est parcourue dans son intégralité ;
- à la seule condition FAUX, aucune instance ne peut convenir.

Le procédé consiste, pour obtenir le filtre simplifié F2, à vérifier de prime abord si le filtre complexe répond à des règles définissant des filtres qui ne sont vérifiés par aucune instance.

Le procédé consiste, pour obtenir le filtre simplifié F2, à :

- transformer le filtre complexe en une combinaison de conditions sur les attributs liées par les opérateurs logiques ET, OU et NON ;
- repousser les opérateurs NON vers les feuilles et supprimer les NON doubles (NON NON) ;
- supprimer les conditions X portant sur des attributs qui ne sont pas des index ;
- simplifier les opérations en résultant ;
- factoriser les ET et OU imbriqués ;
- regrouper les conditions concernant le même index ;
- regrouper tous les OU à la racine du filtre et simplifier à nouveau.

Le procédé consiste, pour supprimer les conditions X, à remplacer les conditions X et NON X par la constante VRAI.

Le procédé consiste, pour simplifier les opérations, à :

- remplacer les tests ET et OU à un seul opérande par cet opérande ;
- remplacer les opérations ET ne contenant que des opérandes VRAI par la constante VRAI et les opérations OU ne contenant que des opérandes FAUX par la constante FAUX ;
- retirer les conditions VRAI des autres opérations ET et les conditions FAUX des autres opérations OU ;
- remplacer les opérations OU contenant au moins un opérande VRAI par la constante VRAI et les opérations ET contenant au moins un opérande FAUX par la constante FAUX ;
- remplacer les conditions s'avérant être toujours VRAI ou FAUX par la constante VRAI ou FAUX ;

toutes ces opérations de simplification étant appliquées autant de fois qu'il est possible de le faire.

Le procédé consiste, dans la deuxième étape, à concaténer la première valeur vérifiant $C1_{(i)}$ à la première valeur vérifiant $C2_{(i)}$ jusqu'à $Cn_{(i)}$ pour obtenir les instances potentielles locales zéro $I1\_0_{(i)}$. $I2\_0_{(i)}$. ... $In\_0_{(i)}$, la première valeur possible en l'absence de condition sur un index donné étant la valeur nulle, l'instance potentielle correspondant à la plus petite des instances potentielles locales zéro.

Le procédé consiste, dans la cinquième étape, à effectuer pour tout i et tant que l'indice p est supérieur à 0 ou qu'aucune instance cherchée n'est trouvée, les opérations suivantes :

S'il existe un $Jp_{(i)} > Ip$ qui vérifie la condition $Cp_{(i)}$, alors l'instance potentielle locale est constituée de la manière suivante:

- pour tout index k < p, on prend la valeur Ik avec I1.I2. ... .In l'identificateur de l'instance solution ;
- pour l'index p, on prend la valeur $Jp_{(i)}$;
- pour tout index k > p, on prend la valeur $Ik\_0_{(i)}$;

Sinon p prend la valeur p-1 et le procédé reprend les opérations ci-dessus, l'instance potentielle correspondant à la plus petite des instances potentielles locales obtenues.

Le procédé consiste, dans la deuxième et la cinquième étapes, à obtenir l'identificateur de test à partir de l'identificateur de l'instance potentielle, en soustrayant 1 à son dernier chiffre si celui-ci est différent de 0, ou en supprimant ce dernier chiffre s'il est nul.

**ANNEXE 1**

**Exemple de valeurs de la table de connexion** :

```
tcpConnState.0.0.0.0.0.0.0.0.0.0 = 1.
tcpConnState.0.0.0.0.7.0.0.0.0.0 = 2
tcpConnState.0.0.0.0.9.0.0.0.0.0 = 2
tcpConnState.0.0.0.0.13.0.0.0.0.0 = 2
tcpConnState.0.0.0.0.19.0.0.0.0.0 = 2
tcpConnState.0.0.0.0.21.0.0.0.0.0 = 2
tcpConnState.0.0.0.0.23.0.0.0.0.0 = 2
tcpConnState.0.0.0.0.25.0.0.0.0.0 = 2
tcpConnState.0.0.0.0.37.0.0.0.0.0 = 2
tcpConnState.0.0.0.0.80.0.0.0.0.0 = 2
tcpConnState.0.0.0.0.111.0.0.0.0.0 = 2
tcpConnState.0.0.0.0.139.0.0.0.0.0 = 2
tcpConnState.0.0.0.0.199.0.0.0.0.0 = 2
tcpConnState.0.0.0.0.512.0.0.0.0.0 = 2
tcpConnState.0.0.0.0.513.0.0.0.0.0 = 2
tcpConnState.0.0.0.0.514.0.0.0.0.0 = 2
tcpConnState.0.0.0.0.540.0.0.0.0.0 = 2
tcpConnState.0.0.0.0.659.0.0.0.0.0 = 2
tcpConnState.0.0.0.0.757.0.0.0.0.0 = 2
tcpConnState.0.0.0.0.779.0.0.0.0.0 = 2
tcpConnState.0.0.0.0.790.0.0.0.0.0 = 2
tcpConnState.0.0.0.0.793.0.0.0.0.0 = 2
tcpConnState.0.0.0.0.919.0.0.0.0.0 = 2
tcpConnState.0.0.0.0.924.0.0.0.0.0 = 2
tcpConnState.0.0.0.0.1024.0.0.0.0.0 = 2
tcpConnState.0.0.0.0.1025.0.0.0.0.0 = 2
tcpConnState.0.0.0.0.2401.0.0.0.0.0 = 2
tcpConnState.0.0.0.0.2600.0.0.0.0.0 = 2
tcpConnState.0.0.0.0.6000.0.0.0.0.0 = 2
tcpConnState.127.0.0.1.1026.127.0.0.1.2600 = 5
tcpConnState.127.0.0.1.2600.127.0.0.1.1026 = 5
tcpConnState.219.182.165.53.23.219.182.165.55.4109 = 5
tcpConnState.219.182.165.53.139.219.182.165.58.2278 = 5
tcpConnState.219.182.165.53.1017.219.182.100.2.1018 = 5
tcpConnState.219.182.165.53.1018.219.182.100.2.514 = 7
tcpConnState.219.182.165.53.1020.219.182.165.55.513 = 5
tcpConnState.219.182.165.53.1021.219.182.165.55.513 = 5
tcpConnState.219.182.165.53.1022.219.182.100.2.1019 = 5
tcpConnState.219.182.165.53.1023.219.182.100.2.514 = 7
tcpConnState.219.182.165.53.1905.219.182.165.55.21 = 8
```

tcpConnState.219.182.165.53.6000.219.182.100.2.1304 = 5
tcpConnLocalAddress.0.0.0.0.0.0.0.0.0.0 = 0.0.0.0
tcpConnLocalAddress.0.0.0.0.7.0.0.0.0.0 = 0.0.0.0
tcpConnLocalAddress.0.0.0.0.9.0.0.0.0.0 = 0.0.0.0
tcpConnLocalAddress.0.0.0.0.13.0.0.0.0.0 = 0.0.0.0
tcpConnLocalAddress.0.0.0.0.19.0.0.0.0.0 = 0.0.0.0
tcpConnLocalAddress.0.0.0.0.21.0.0.0.0.0 = 0.0.0.0
tcpConnLocalAddress.0.0.0.0.23.0.0.0.0.0 = 0.0.0.0
tcpConnLocalAddress.0.0.0.0.25.0.0.0.0.0 = 0.0.0.0
tcpConnLocalAddress.0.0.0.0.37.0.0.0.0.0 = 0.0.0.0
tcpConnLocalAddress.0.0.0.0.80.0.0.0.0.0 = 0.0.0.0
tcpConnLocalAddress.0.0.0.0.111.0.0.0.0.0 = 0.0.0.0
tcpConnLocalAddress.0.0.0.0.139.0.0.0.0.0 = 0.0.0.0
tcpConnLocalAddress.0.0.0.0.199.0.0.0.0.0 = 0.0.0.0
tcpConnLocalAddress.0.0.0.0.512.0.0.0.0.0 = 0.0.0.0
tcpConnLocalAddress.0.0.0.0.513.0.0.0.0.0 = 0.0.0.0
tcpConnLocalAddress.0.0.0.0.514.0.0.0.0.0 = 0.0.0.0
tcpConnLocalAddress.0.0.0.0.540.0.0.0.0.0 = 0.0.0.0
tcpConnLocalAddress.0.0.0.0.659.0.0.0.0.0 = 0.0.0.0
tcpConnLocalAddress.0.0.0.0.757.0.0.0.0.0 = 0.0.0.0
tcpConnLocalAddress.0.0.0.0.779.0.0.0.0.0 = 0.0.0.0
tcpConnLocalAddress.0.0.0.0.790.0.0.0.0.0 = 0.0.0.0
tcpConnLocalAddress.0.0.0.0.793.0.0.0.0.0 = 0.0.0.0
tcpConnLocalAddress.0.0.0.0.919.0.0.0.0.0 = 0.0.0.0
tcpConnLocalAddress.0.0.0.0.924.0.0.0.0.0 = 0.0.0.0
tcpConnLocalAddress.0.0.0.0.1024.0.0.0.0.0 = 0.0.0.0
tcpConnLocalAddress.0.0.0.0.1025.0.0.0.0.0 = 0.0.0.0
tcpConnLocalAddress.0.0.0.0.2401.0.0.0.0.0 = 0.0.0.0
tcpConnLocalAddress.0.0.0.0.2600.0.0.0.0.0 = 0.0.0.0
tcpConnLocalAddress.0.0.0.0.6000.0.0.0.0.0 = 0.0.0.0
tcpconnLocalAddress.127.0.0.1.1026.127.0.0.1.2600 = 127.0.0.1
tcpConnLocalAddress.127.0.0.1.2600.127.0.0.1.1026 = 127.0.0.1
tcpConnLocalAddress.219.182.165.53.23.219.182.165.55.4109 = 219.182.165.53
tcpConnLocalAddress.219.182.165.53.139.219.182.165.58.2278 = 219.182.165.53
tcpConnLocalAddress.219.182.165.53.1017.219.182.100.2.1018 = 219.182.165.53
tcpConnLocalAddress.219.182.165.53.1018.219.182.100.2.514 = 219.182.165.53
tcpConnLocalAddress.219.182.165.53.1020.219.182.165.55.513 = 219.182.165.53
tcpConnLocalAddress.219.182.165.53.1021.219.182.165.55.513 = 219.182.165.53
tcpConnLocalAddress.219.182.165.53.1022.219.182.100.2.1019 = 219.182.165.53
tcpConnLocalAddress.219.182.165.53.1023.219.182.100.2.514 = 219.182.165.53
tcpConnLocalAddress.219.182.165.53.1905.219.182.165.55.21 = 219.182.165.53
tcpConnLocalAddress.219.182.165.53.6000.219.182.100.2.1304 = 219.182.165.53
tcpConnLocalPort.0.0.0.0.0.0.0.0.0.0 = 0
tcpConnLocalPort.0.0.0.0.7.0.0.0.0.0 = 7
tcpConnLocalPort.0.0.0.0.9.0.0.0.0.0 = 9
tcpConnLocalPort.0.0.0.0.13.0.0.0.0.0 = 13
tcpConnLocalPort0.0.0.0.19.0.0.0.0.0 = 19
tcpConnLocalPort.0.0.0.0.21.0.0.0.0.0 = 21
tcpConnLocalPort.0.0.0.0.23.0.0.0.0.0 = 23
tcpConnLocalPort.0.0.0.0.25.0.0.0.0.0 = 25
tcpConnLocalPort.0.0.0.0.37.0.0.0.0.0 = 37
tcpConnLocalPort.0.0.0.0.80.0.0.0.0.0 = 80
tcpConnLocalPort.0.0.0.0.111.0.0.0.0.0 = 111
tcpConnLocalPort.0.0.0.0.139.0.0.0.0.0 = 139
tcpConnLocalPort.0.0.0.0.199.0.0.0.0.0 = 199
tcpConnLocalPorL0.0.0.0.512.0.0.0.0.0 = 512
tcpConnLocalPort.0.0.0.0.513.0.0.0.0.0 = 513
tcpConnLocalPort.0.0.0.0.514.0.0.0.0.0 = 514

```
tcpConnLocalPort.0.0.0.0.540.0.0.0.0.0 = 540
tcpConnLocalPort.0.0.0.0.659.0.0.0.0.0 = 659
tcpConnLocalPort.0.0.0.0.757.0.0.0.0.0 = 757
tcpConnLocalPort.0.0.0.0.779.0.0.0.0.0 = 779
tcpConnLocalPort.0.0.0.0.790.0.0.0.0.0 = 790
tcpConnLocalPort0.0.0.0.793.0.0.0.0.0 = 793
tcpConnLocalPort0.0.0.0.919.0.0.0.0.0 = 919
tcpConnLocalPort.0.0.0.0.924.0.0.0.0.0 = 924
tcpConnLocalPort.0.0.0.0.1024.0.0.0.0.0 = 1024
tcpConnLocalPort.0.0.0.0.1025.0.0.0.0.0 = 1025
tcpConnLocalPort.0.0.0.0.2401.0.0.0.0.0 = 2401
tcpConnLocalPort.0.0.0.0.2600.0.0.0.0.0 = 2600
tcpConnLocalPort.0.0.0.0.6000.0.0.0.0.0 = 6000
tcpConnLocalPort.127.0.0.1.1026.127.0.0.1.2600 = 1026
tcpConnLocalPort.127.0.0.1.2600.127.0.0.1.1026 = 2600
tcpConnLocalPort.219.182.165.53.23.219.182.165.55.4109 = 23
tcpConnLocalPort.219.182.165.53.139.219.182.165.58.2278= 139
tcpConnLocalPort.219.182.165.53.1017.219.182.100.2.1018 = 1017
tcpConnLocalPort219.182.165.53.1018.219.182.100.2.514 = 1018
tcpConnLocalPort.219.182.165.53.1020.219.182.165.55.513 = 1020
tcpConnLocalPort219.182.165.53.1021.219.182.165.55.513 = 1021
tcpConnLocalPort.219.182.165.53.1022.219.182.100.2.1019 = 1022
tcpConnLocalPort.219.182.165.53.1023.219.182.100.2.514 = 1023
tcpConnLocalPort.219.182.165.53.1905.219.182.165.55.21 = 1905
tcpConnLocalPort.219.182.165.53.6000.219.182.100.2.1304 = 6000
tcpConnRemAddress.0.0.0.0.0.0.0.0.0 = 0.0.0.0
tcpConnRemAddress.0.0.0.0.7.0.0.0.0.0 = 0.0.0.0
tcpConnRemAddress.0.0.0.0.9.0.0.0.0.0 = 0.0.0.0
tcpConnRemAddress.0.0.0.0.13.0.0.0.0.0 = 0.0.0.0
tcpConnRemAddress.0.0.0.0.19.0.0.0.0.0 = 0.0.0.0
tcpConnRemAddress.0.0.0.0.21.0.0.0.0.0 = 0.0.0.0
tcpConnRemAddress.0.0.0.0.23.0.0.0.0.0 = 0.0.0.0
tcpConnRemAddress.0.0.0.0.25.0.0.0.0.0 = 0.0.0.0
tcpConnRemAddress.0.0.0.0.37.0.0.0.0.0 = 0.0.0.0
tcpConnRemAddress.0.0.0.0.80.0.0.0.0.0 = 0.0.0.0
tcpConnRemAddress.0.0.0.0.111.0.0.0.0.0 = 0.0.0.0
tcpConnRemAddress.0.0.0.0.139.0.0.0.0.0 = 0.0.0.0
tcpConnRemAddress.0.0.0.0.199.0.0.0.0.0 = 0.0.0.0
tcpConnRemAddress.0.0.0.0.512.0.0.0.0.0 = 0.0.0.0
tcpConnRemAddress.0.0.0.0.513.0.0.0.0.0 = 0.0.0.0
tcpConnRemAddress.0.0.0.0.514.0.0.0.0.0 = 0.0.0.0
tcpConnRemAddress.0.0.0.0.540.0.0.0.0.0 = 0.0.0.0
tcpConnRemAddress.0.0.0.0.659.0.0.0.0.0 = 0.0.0.0
tcpConnRemAddress.0.0.0.0.757.0.0.0.0.0 = 0.0.0.0
tcpConnRemAddress.0.0.0.0.779.0.0.0.0.0 = 0.0.0.0
tcpConnRemAddress.0.0.0.0.790.0.0.0.0.0 = 0.0.0.0
tcpConnRemAddress.0.0.0.0.793.0.0.0.0.0 = 0.0.0.0
tcpConnRemAddress.0.0.0.0.919.0.0.0.0.0 = 0.0.0.0
tcpConnRemAddress.0.0.0.0.924.0.0.0.0.0 = 0.0.0.0
tcpConnRemAddress.0.0.0.0.1024.0.0.0.0.0 = 0.0.0.0
tcpConnRemAddress.0.0.0.0.1025.0.0.0.0.0 = 0.0.0.0
tcpConnRemAddress.0.0.0.0.2401.0.0.0.0.0 = 0.0.0.0
tcpConnRemAddress.0.0.0.0.2600.0.0.0.0.0 = 0.0.0.0
tcpConnRemAddress.0.0.0.0.6000.0.0.0.0.0 = 0.0.0.0
tcpConnRemAddress.127.0.0.1.1026.127.0.0.1.2600 = 127.0.0.1
tcpConnRemAddress.127.0.0.1.2600.127.0.0.1.1026 = 127.0.0.1
tcpConnRemAddress.219.182.165.53.23.219.182.165.55.4109 = 219.182.165.55
tcpConnRemAddress.219.182.165.53.139.219.182.165.58.2278= 219.182.165.58
```

```
tcpConnRemAddress.219.182.165.53.1017.219.182.100.2.1018 = 219.182.100.2
tcpConnRemAddress.219.182.165.53.1018.219.182.100.2.514 = 219.182.100.2
tcpConnRemAddress.219.182.165.53.1020.219.182.165.55.513 = 219.182.165.55
tcpConnRemAddress.219.182.165.53.1021.219.182.165.55.513 = 219.182.165.55
tcpConnRemAddress.219.182.165.53.1022.219.182.100.2.1019 = 219.182.100.2
tcpConnRemAddress.219.182.165.53.1023.219.182.100.2.514 = 219.182.100.2
tcpConnRemAddress.219.182.165.53.1905.219.182.165.55.21 = 219.182.165.55
tcpConnRemAddress.219.182.165.53.6000.219.182.100.2.1304 = 219.182.100.2
tcpConnRemPort.0.0.0.0.0.0.0.0.0 = 0
tcpConnRemPort.0.0.0.0.7.0.0.0.0.0 = 0
tcpConnRemPort.0.0.0.0.9.0.0.0.0.0 = 0
tcpConnRemPort.0.0.0.0.13.0.0.0.0.0 = 0
tcpConnRemPort.0.0.0.0.19.0.0.0.0.0 = 0
tcpConnRemPort.0.0.0.0.21.0.0.0.0.0 = 0
tcpConnRemPort.0.0.0.0.23.0.0.0.0.0 = 0
tcpConnRemPort.0.0.0.0.25.0.0.0.0.0 = 0
tcpConnRemPort.0.0.0.0.37.0.0.0.0.0 = 0
tcpConnRemPort.0.0.0.0.80.0.0.0.0.0 = 0
tcpConnRemPort.0.0.0.0.111.0.0.0.0.0 = 0
tcpConnRemPort.0.0.0.0.139.0.0.0.0.0 = 0
tcpConnRemPort.0.0.0.0.199.0.0.0.0.0 = 0
tcpConnRemPort.0.0.0.0.512.0.0.0.0.0 = 0
tcpConnRemPort.0.0.0.0.513.0.0.0.0.0 = 0
tcpConnRemPort.0.0.0.0.514.0.0.0.0.0 = 0
tcpConnRemPort.0.0.0.0.540.0.0.0.0.0 = 0
tcpConnRemPort.0.0.0.0.659.0.0.0.0.0 = 0
tcpConnRemPort.0.0.0.0.757.0.0.0.0.0 = 0
tcpConnRemPort.0.0.0.0.779.0.0.0.0.0 = 0
tcpConnRemPort.0.0.0.0.790.0.0.0.0.0 = 0
tcpConnRemPort.0.0.0.0.793.0.0.0.0.0 = 0
tcpConnRemPort.0.0.0.0.919.0.0.0.0.0 = 0
tcpConnRemPort.0.0.0.0.924.0.0.0.0.0 = 0
tcpConnRemPort.0.0.0.0.1024.0.0.0.0.0 = 0
tcpConnRemPort.0.0.0.0.1025.0.0.0.0.0 = 0
tcpConnRemPort.0.0.0.0.2401.0.0.0.0.0 = 0
tcpConnRemPort.0.0.0.0.2600.0.0.0.0.0 = 0
tcpConnRemPort.0.0.0.0.6000.0.0.0.0.0 = 0
tcpConnRemPort.127.0.0.1.1026.127.0.0.1.2600 = 2600
tcpConnRemPort.127.0.0.1.2600.127.0.0.1.1026 = 1026
tcpConnRemPort.219.182.165.53.23.219.182.165.55.4109 = 4109
tcpConnRemPort.219.182.165.53.139.219.182.165.58.2278= 2278
tcpConnRemPort.219.182.165.53.1017.219.182.100.2.1018 = 1018
tcpConnRemPort.219.182.165.53.1018.219.182.100.2.514 = 514
tcpConnRemPort.219.182.165.53.1020.219.182.165.55.513 = 513
tcpConnRemPort.219.182.165.53.1021.219.182.165.55.513 = 513
tcpConnRemPort.219.182.165.53.1022.219.182.100.2.1019 = 1019
tcpConnRemPort.219.182.165.53.1023.219.182.100.2.514 = 514
tcpConnRemPort.219.182.165.53.1905.219.182.165.55.21 = 21
tcpConnRemPort.219.182.165.53.6000.219.182.100.2.1304 = 1304
```

**Revendications**

1. Procédé de traitement d'une requête complexe adressée à au moins un agent (5) SNMP d'une machine (2b) ressource d'un système informatique (1) à partir d'un gestionnaire (4) de protocole complexe d'une machine (2a) application, chaque agent (5) gérant des tables d'attributs appartenant à la machine (2b) ressource, les instances des tables étant référencées par des identificateurs comprenant des index, **caractérisé en ce qu'**il comporte les étapes suivantes:

• transformer un filtre issu de la requête complexe, appelé filtre complexe en un filtre simplifié ne comportant que des conditions sur des index, le filtre simplifié respectant les caractéristiques de correspondance suivantes : le filtre simplifié laisse passer toutes les requêtes SNMP dont les réponses pourraient vérifier le filtre complexe, mais filtre toutes les requêtes SNMP dont les réponses ne peuvent en aucun cas vérifier le filtre complexe; • restreindre les requêtes SNMP à celles qui respectent le filtre simplifié ; et appliquer le filtre complexe sur les réponses.

**2.** Procédé selon la revendication 1, comportant, après ladite transformation du filtre complexe, en filtre simplifié, les étapes suivantes :

1) une étape, appelée étape A, consistant à déterminer la première instance potentielle vérifiant le filtre simplifié parmi lesdites instances de tables d'attributs; l'identificateur qui est juste inférieur à l'identificateur de l'instance potentielle déterminée à cette étape A est appelé l'identificateur de test ; 2) une étape, appelée étape B, consistant à retrouver, parmi lesdites instances de tables d'attributs, à partir d'une requête SNMP parmi lesdites requêtes SNMP qui ont été laissé passer, l'instance de table ayant pour identificateur celui qui suit l'identificateur de test ; si aucune instance n'est retrouvée, le procédé de traitement est terminé ; et si une instance est retrouvée,

• l'instance retrouvée est appelée l'instance solution ; • 3) une étape, appelée étape C, est effectuée, consistant à appliquer le filtre complexe à l'instance solution ; si l'instance solution vérifie le filtre complexe, elle fait partie de la réponse à la requête complexe traitée ; • 4) une étape, appelée étape D, est effectuée, consistant à déterminer, parmi lesdites instances de tables d'attributs, la première instance potentielle dont l'identificateur est supérieur à l'identificateur de l'instance solution et vérifiant le filtre simplifié ; si aucune instance n'est retrouvée, le procédé de traitement est terminé ; et :

• si une instance est retrouvée, l'identificateur qui est juste inférieur à l'identificateur de l'instance potentielle déterminée à l'étape D est appelé l'identificateur de test et le procédé continue à l'étape B avec ce nouvel identificateur de test.

**3.** Procédé selon la revendication 2, **caractérisé en ce qu'**il comporte, dans ladite étape de transformation, l'obtention d'un filtre simplifié de la forme :

$$
\begin{aligned}
(OU \\
\quad (ET \\
\qquad \text{condition sur l'index 1 : } C1_{(1)} \\
\qquad \text{condition sur l'index 2 : } C2_{(1)} \\
\qquad \dots \\
\qquad \text{condition sur l'index n : } Cn_{(1)} \\
\quad ) \\
\quad \dots \\
\quad (ET \\
\qquad \text{condition sur l'index 1 : } C1_{(i)} \\
\qquad \text{condition sur l'index 2 : } C2_{(i)} \\
\qquad \dots \\
\qquad \text{condition sur l'index n : } Cn_{(i)} \\
\quad ) \\
\quad \dots \\
).
\end{aligned}
$$

4. Procédé selon l'une des revendications 2 ou 3, **caractérisé en ce que** si ledit filtre simplifié se résume :

   • à la seule condition VRAI, la table est parcourue dans son intégralité ;
   • à la seule condition FAUX, aucune instance ne peut convenir.

5. Procédé selon l'une des revendications 2 à 4, **caractérisé en ce que** ladite étape de transformation comprend la vérification de prime abord si le filtre complexe répond à des règles définissant des filtres qui ne sont vérifiés par aucune instance.

6. Procédé selon l'une des revendications 1 à 5, **caractérisé en ce que** ladite étape de transformation comprend les étapes suivantes

   • transformer le filtre complexe en une combinaison de conditions sur les attributs liées par les opérateurs logiques ET, OU et NON ;
   • repousser les opérateurs NON vers les feuilles et supprimer les NON doubles (NON NON) ;
   • supprimer les conditions (X) portant sur des attributs qui ne sont pas des index ;
   • simplifier les opérations en résultant ;
   • factoriser les ET et OU imbriqués ;
   • regrouper les conditions concernant le même index ;
   • regrouper tous les OU à la racine du filtre ainsi obtenu et simplifier à nouveau.

7. Procédé selon la revendication 6, où, pour supprimer lesdites conditions portant sur des attributs qui ne sont pas des index, lesdites conditions aussi bien que leurs négations sont remplacées par la constante VRAI.

8. Procédé selon l'une des revendications 6 ou 7, où simplifier les opérations consiste en :

   • remplacer les tests ET et OU à un seul opérande par cet opérande ;
   • remplacer les opérations ET ne contenant que des opérandes VRAI par la constante VRAI et les opérations OU ne contenant que des opérandes FAUX par la constante FAUX ;
   • retirer les conditions VRAI des autres opérations ET et les conditions FAUX des autres opérations OU ;
   • remplacer les opérations OU contenant au moins un opérande VRAI par la constante VRAI et les opérations ET contenant au moins un opérande FAUX par la constante FAUX ;
   • remplacer les conditions s'avérant être toujours VRAI ou FAUX par la constante VRAI ou FAUX ;

toutes ces opérations de simplification étant appliquées autant de fois qu'il est possible de le faire.

9. Procédé selon la revendication 3, **caractérisé en ce que** l'étape de restreindre les requêtes SNMP comprend la concaténation de la première valeur vérifiant $C1_{(i)}$ à la première valeur vérifiant $C2_{(i)}$ jusqu'à $Cn_{(i)}$ pour obtenir les instances potentielles locales zéro $I1\_0_{(i)}$, $I2\_0_{(i)}$. ... $In\_0_{(i)}$, la première valeur possible en l'absence de condition sur un index donné étant la valeur nulle, l'instance potentielle correspondant à la plus petite des instances potentielles locales zéro.

10. Procédé selon l'une des revendications 2 à 9, dans lequel les étapes A et D de la revendication 2 comprennent chacune l'obtention de l'identificateur de test à partir de l'identificateur de l'instance potentielle, en soustrayant 1 à son dernier chiffre si celui-ci est différent de 0, ou en supprimant ce dernier chiffre s'il est nul.

11. Système de traitement d'une requête complexe adressée à au moins un agent (5) SNMP d'une machine (2b) ressource d'un système informatique (1) à partir d'un gestionnaire (4) de protocole complexe d'une machine (2a) application, chaque agent (5) gérant des tables d'attributs appartenant à la machine (2b) ressource, les instances des tables étant référencées par des identificateurs comprenant des index, le système comprenant un agent intégrateur (6) adapté à la mise en oeuvre du procédé de traitement selon l'une des revendications 1 à 10.

**Claims**

1. Method of processing a complex request sent by means of an SNMP agent (5) of a resource machine (2b) of a computer system (1) from a complex protocol controller (4) of an application machine (2a), each agent (5) controlling attribute tables belonging to the resource machine (2b), the instances of the tables being referenced by identifiers comprising indices, **characterised in that** it comprises the following steps

• convert a filter from the complex request called complex filter into a simplified filter comprising only conditions on the indices, the simplified filter complying with the following characteristics of correspondence: the simplified filter passes all the SNMP requests with responses that can verify the complex filter, but filters all the SNMP requests with responses that can never verify the complex filter;
• restrict the SNMP requests to those that comply with simplified filter, and apply the complex filter on the responses.

2. Method according to claim 1, comprising, after the said conversion of the complex filter, in the simplified filter, the following steps:

-1) a step, called step A, consisting in determining the first potential instance verifying the simplified filter among said instances of attribute tables; the identifier that is just below the identifier of the potential instance determined at this step A is called the test identifier,
-2) a step, called step B, consisting in finding, among said instances of attribute tables, from an SNMP request among said SNMP requests that was passed, the instance of table having for identifier the one that follows the test identifier; if no instance is found, the processing method is terminated; and

- if an instance is found,

- the instance recovered is called the solution instance,

- 3) a step, called step C, is made, step C consisting in applying the complex filter to the solution instance; if the solution instance verifies the complex filter, it is part of the response of the complex request processed;
- 4) a step, called step D, is made, step D consisting in determining, among said instances of attribute tables, the first potential instance for which the identifier is greater than the identifier of the solution instance and verifying the simplified filter; if no instance is recovered, the processing method is terminated; and:

- if an instance is recovered, the identifier that is just below the identifier of the potential instance determined at step D is called test identifier and the method continue step B with this new test identifier.

3. Method according to claim 2, **characterized in that**, in the conversion step, it comprises the obtaining of a simplified filter of the form:

$$
\begin{aligned}
&\text{(OR} \\
&\quad \text{(AND} \\
&\qquad \text{condition on index 1: } C1_{(1)} \\
&\qquad \text{condition on index 2: } C2_{(1)} \\
&\qquad \ldots \\
&\qquad \text{condition on index n: } Cn_{(1)} \\
&\quad \text{)} \\
&\quad \ldots \\
&\quad \text{(AND} \\
&\qquad \text{condition on index 1: } C1_{(1)} \\
&\qquad \text{condition on index 2: } C2_{(1)} \\
&\qquad \ldots \\
&\qquad \text{condition on index n: } Cn_{(1)} \\
&\quad \text{)} \\
&\quad \ldots \\
&\text{).}
\end{aligned}
$$

**4.** Method according to one of claims 2 or 3, **characterized in that** if the said simplified filter amounts to a:

- TRUE condition only, the entire table is searched;
- FALSE condition only, there is no appropriate instance.

**5.** Method according to one of claims 2 to 4, **characterized in that** the said conversion step comprises the verification at first glance if the complex filter complies with the rules defining filters that are not verified by any instance.

**6.** Method according to one of claims 1 to 5, **characterized in that** the said conversion step comprises the following steps:

- convert the complex filter into a combination of conditions on the attributes linked by the logical operators AND, OR and NOT,
- push the NOT operators toward the leaves and remove the double NOTs (NOT NOT),
- remove the (X) conditions concerning attributes that are not indices,
- simplify the resulting operations,
- factorise the nested ANDs and ORs,
- regroup the conditions concerning the same index,
- regroup all the ORs at the root of the obtained filter and simplify again.

**7.** Method according to claim 6 wherein to remove the said conditions concerning attributes that are not indices, the said conditions and their negations are replaced with the constant TRUE.

**8.** Method according to one of claims 6 or 7, where to simplify the operations consists in:

- replacing the AND and OR tests with a single operand by this operand,
- replacing the AND operations containing only TRUE operands by the constant TRUE and the OR operations containing only FALSE operands by the constant FALSE,

• removing the TRUE conditions of the other AND operations and the FALSE conditions of the other OR operations,
• replacing the OR operations containing at least one TRUE operand by the TRUE constant and the AND operations containing at least one FALSE operand by the FALSE constant,
• replacing the conditions proving to be always TRUE or FALSE by the constant TRUE or FALSE,

all these simplification operations being applied as many times as it is possible to do so.

9. Method according to claim 3, **characterized in that** the step of restraining the SNMP requests comprises the concatenation of the first value verifying $C1_{(i)}$ with the first value verifying $C2_{(i)}$ up to $Cn_{(i)}$ to obtain the zero local potential instances $I1\_0_{(i)}$. $I2\_0_{(i)}$. ... $In\_0_{(i)}$, the first value possible in the absence of a condition on a given index being the null value, the potential instance corresponding to the smallest of zero local potential instances.

10. Method according to one of claims 2 to 9, in which the steps A and D of claim 2 each comprise the obtaining of the test identifier from the identifier of the potential instance, by subtracting 1 from the last figure if this figure differs from 0 or by deleting this figure if it is null.

11. System for processing a complex request sent to at least one SNMP agent (5) of a resource machine (2b) of a computer system (1) from a complex protocol controller (4) of an application machine (2a), each agent (5) controlling the attribute tables belonging to the resource machine (2b), the instances of the tables being referenced by identifiers comprising indices, the system comprising an integrator agent (6) adapted to the implementation of the processing method according to one of claims 1 to 10.

## Patentansprüche

1. Verfahren zur Bearbeitung einer komplexen, an mindestens einen SNMP-Agenten (5) einer als Ressource eines Computersystems (1) eingesetzten Maschine (2b) gerichteten Abfrage ausgehend von einem Manager (4) eines komplexen Protokolls einer Anwendungsmaschine (2a), wobei jeder Agent (5) Attributtabellen managt, die zu der Ressourcenmaschine (2b) gehören, wobei die Tabelleninstanzen durch Indizes umfassende Kennungen referenziert werden, **dadurch gekennzeichnet, dass** es die folgenden Schritte aufweist:

• Umwandeln eines aus der komplexen Abfrage resultierenden so genannten komplexen Filters in ein vereinfachtes Filter, das nur Bedingungen für Indizes aufweist, wobei das vereinfachte Filter die folgenden Zuordnungscharakteristiken einhält: das vereinfachte Filter lässt alle SNMP-Abfragen durch, deren Antworten das komplexe Filter verifizieren könnten, filtert jedoch alle SNMP-Abfragen aus, deren Antworten das komplexe Filter keinesfalls verifizieren können;
• Beschränken der SNMP-Abfragen auf diejenigen, die das vereinfachte Filter respektieren, sowie Anwenden des komplexen Filters auf die Antworten.

2. Verfahren nach Anspruch 1, welches nach der Umwandlung des komplexen Filters in ein vereinfachtes Filter die folgenden Schritte aufweist:

1) einen als Schritt A bezeichneten Schritt, der darin besteht, die erste potenzielle, das vereinfachte Filter verifizierende Instanz unter den Instanzen von Attributtabellen zu ermitteln; die Kennung, die direkt unter der Kennung der in diesem Schritt A ermittelten potentiellen Instanz liegt, wird mit Testkennung bezeichnet;
2) einen als Schritt B bezeichneten Schritt, der darin besteht, unter den Instanzen von Attributtabellen ausgehend von einer SNMP-Abfrage unter den durchgelassenen SNMP-Abfragen die Tabelleninstanz wiederzufinden, deren Kennung diejenige ist, die auf die Testkennung folgt; wenn keine Instanz wieder gefunden wird, ist das Bearbeitungsverfahren beendet; und wenn eine Instanz wieder gefunden wird,

• wird die wieder gefundene Instanz mit Lösungsinstanz bezeichnet;
• 3) ein als Schritt C bezeichneter Schritt durchgeführt wird, der darin besteht, das komplexe Filter auf die Lösungsinstanz anzuwenden; wenn die Lösungsinstanz das komplexe Filter verifiziert, ist sie Teil der Antwort auf die bearbeitete komplexe Abfrage;
• 4) ein als Schritt C bezeichneter Schritt durchgeführt wird, der darin besteht, unter den Instanzen von Attributtabellen die erste potenzielle Instanz zu ermitteln, deren Kennung über der Kennung der Lösungsinstanz liegt und die das vereinfachte Filter verifiziert; wenn keine Instanz wieder gefunden wird, ist das Bearbeitungsverfahren beendet; und

• wenn eine Instanz wieder gefunden wird, wird die Kennung, die direkt unter der Kennung der in Schritt D ermittelten potenziellen Instanz liegt, mit Testkennung bezeichnet, und das Verfahren setzt sich ab Schritt B mit dieser neuen Testkennung fort.

3. Verfahren nach Anspruch 2, **dadurch gekennzeichnet, dass** es in dem Umwandlungsschritt die Erzielung eines vereinfachten Filters umfasst, der folgenden Form:

```
(ODER

    (UND

    Bedingung für den Index 1: C1(1)

    Bedingung für den Index 2: C2(1)

    ...

    Bedingung für den Index n: Cn(1)

    )

    ...

    (UND

    Bedingung für den Index 1: C1(i)

    Bedingung für den Index 2: C2(i)

    ...

    Bedingung für den Index n: Cn(i)

    )

    ...

).
```

4. Verfahren nach einem der Ansprüche 2 oder 3, **dadurch gekennzeichnet, dass**, wenn sich das vereinfachte Filter zusammenfassen lässt

• zu der einzigen Bedingung RICHTIG, die Tabelle vollständig durchlaufen wird,
• zu der einzigen Bedingung FALSCH, keine Instanz passen kann.

5. Verfahren nach einem der Ansprüche 2 bis 4, **dadurch gekennzeichnet, dass** der Umwandlungsschritt zunächst die Verifizierung umfasst, ob das komplexe Filter Vorschriften entspricht, die Filter definieren, die von keiner Instanz verifiziert werden.

6. Verfahren nach einem der Ansprüche 1 bis 5, **dadurch gekennzeichnet, dass** der Umwandlungsschritt die folgenden Schritte umfasst:

• das komplexe Filter in eine Kombination von durch die logischen Operatoren UND, ODER und NICHT verknüpften Bedingungen für die Attribute umwandeln;
• die NICHT-Operatoren zu den Blättern zurückschieben und die doppelten NICHTs (NICHT NICHT) entfernen;
• die Bedingungen (X) entfernen, die Attribute betreffen, die keine Indizes sind;
• die sich daraus ergebenden Operationen vereinfachen;
• die verschachtelten UND und ODER faktorisieren;
• die denselben Index betreffenden Bedingungen zusammenfassen;
• alle ODER an der Wurzel des sich derart ergebenden Filters zusammenfassen und erneut vereinfachen.

**7.** Verfahren nach Anspruch 6, bei dem, um die Bedingungen betreffend Attribute, die keine Indizes sind, zu entfernen, sowohl die Bedingungen als auch deren Negationen durch die Konstante RICHTIG ersetzt werden.

**8.** Verfahren nach einem der Ansprüche 6 oder 7, bei dem die Vereinfachung der Operationen darin besteht,

  • die UND- und ODER-Tests mit einem einzigen Operanden durch diesen Operanden zu ersetzen;
  • die lediglich Operanden RICHTIG enthaltenden UND-Operationen durch die Konstante RICHTIG und die lediglich Operanden FALSCH enthaltenden ODER-Operationen durch die Konstante FALSCH ersetzen;
  • die RICHTIG-Bedingungen aus den anderen UND-Operationen und die FALSCH-Bedingungen aus den anderen ODER-Operationen entfernen;
  • die mindestens einen Operanden RICHTIG enthaltenden ODER-Operationen durch die Konstante RICHTIG und die mindestens einen Operanden FALSCH enthaltenden UND-Operationen durch die Konstante FALSCH ersetzen;
  • die sich als immer RICHTIG oder FALSCH erweisenden Bedingungen durch die Konstante RICHTIG oder FALSCH ersetzen;

wobei alle diese Vereinfachungsoperationen so viele Male wie möglich angewendet werden.

**9.** Verfahren nach Anspruch 3, **dadurch gekennzeichnet, dass** der Schritt der Beschränkung der SNMP-Abfragen die Verkettung des ersten, $C1_{(1)}$ verifizierenden Wertes mit dem ersten, $C2_{(i)}$ bis $Cn_{(i)}$ verifizierenden Wert umfasst, um die potenziellen lokalen Null-Instanzen $I1\_0_{(i)}$. $I2\_0_{(i)}$. ... $In\_0_{(i)}$ zu erzielen, wobei der erste mögliche Wert bei fehlender Bedingung für einen gegebenen Index der Wert Null ist, wobei die potenzielle Instanz der kleinstem der potenziellen lokalen Null-Instanzen entspricht.

**10.** Verfahren nach einem der Ansprüche 2 bis 9, bei dem die Schritte A und D des Anspruchs 2 jeweils die Erzielung der Testkennung von der Kennung der potenziellen Instanz ausgehend umfassen, indem von deren letzter ziffer 1 subtrahiert wird, wenn diese ni.cht gleich 0 ist, oder indem diese letzte Ziffer entfernt wird, wenn sie gleich Null ist.

**11.** System zur Bearbeitung einer komplexen, an mindestens einen SNMP-Agenten (5) einer als Ressource eines Computersystems (1) eingesetzten Maschine (2b) gerichteten Abfrage ausgehend von einem Manager (4) eines komplexen Protokolls einer Anwendungsmaschine (2a), wobei jeder Agent (5) Attributtabellen managt, die zu der Ressourcenmaschine (2b) gehören, wobei die Tabelleninstanzen durch Indizes umfassende Kennungen referenziert werden, wobei das System einen Integrationsagenten (6) umfasst, welcher für die Durchführung des Bearbeitungsverfahrens nach einem der Ansprüche 1. bis 10 eingerichtet ist.

1

4

2a

| GESTIONNAIRE CMIP |
|---|

CMIP

6

| AI SNMP |
|---|

=

| Agent CMIP Gestionnaire SNMP |
|---|

. 3 →

SNMP

5

| Agent SNMP |
|---|

2b

**FIG.1**

FIG.2

FIG.3